Europäisches Patentamt

European Patent Office

Office européen des brevets

(19)

(11) Publication number: **0 072 505**
**B1**

(12)                **EUROPEAN PATENT SPECIFICATION**

(45) Date of publication of patent specification: **02.11.88**     (51) Int. Cl.⁴: **B 29 C 35/08, H 05 B 6/80**

(21) Application number: **82107093.5**

(22) Date of filing: **05.08.82**

(54) Method and apparatus for preheating elastomer products.

(30) Priority: **06.08.81 JP 123726/81**

(43) Date of publication of application:
**23.02.83 Bulletin 83/08**

(45) Publication of the grant of the patent:
**02.11.88 Bulletin 88/44**

(84) Designated Contracting States:
**DE FR GB**

(56) References cited:
**US-A-3 745 291**
**US-A-3 806 689**
**US-A-3 867 606**

(73) Proprietor: **SUMITOMO RUBBER INDUSTRIES LIMITED**
**No. 1-1, Tsutsui-cho 1-chome**
**Chuo-ku Kobe-shi Hyogo 651 (JP)**

(72) Inventor: **Arimatsu, Toshio**
**2-8-8, Matsunouchi**
**Akashi-shi Hyogo-ken (JP)**

(74) Representative: **Vossius & Partner**
**Siebertstrasse 4 P.O. Box 86 07 67**
**D-8000 München 86 (DE)**

Courier Press, Leamington Spa, England.

## Description

The present invention generally relates to a method and an apparatus for the preheating or vulcanization of elastomer products made, for example, of synthetic rubber, elastomeric plastics, etc., and more particularly, to an improved method of preheating green tires for pneumatic tires, solid tires and the like up to a predetermined temperature prior to vulcanization thereof by a vulcanizing machine.

Conventionally, the vulcanization of elastomer products such as a green tire having a thick portion with a large heat capacity has been problematic in that if the green tire is heated at high temperatures to achieve the best state for vulcanization up to a central portion of its thick portion, the outer portion of the green tire is undesirably brought into a state of over-vulcanization when its central portion has reached the optimum state for vulcanization, entailing an excessive waste of thermal energy. It has therefore been general practice to effect a preheating operation by which the elastomer product is preheated up to a predetermined temperature prior to being vulcanized.

For the aforementioned preheating operation, a preheating process involving irradiation with microwaves (i.e. dielectric heating) has been mainly employed since it has the following advantages. Firstly, in dielectric heating the preheating operation starts with a temperature rise at the inner portion of the elastomer product, where it is most difficult to raise the temperature by conduction heating, i.e. at its central portion where vulcanization is delayed most (for example at the innermost portion of a tread section of the green tire); thus this preheating process is very desirable from the viewpoint of efficient vulcanization. Secondly, a reduction in the total time required for vulcanization becomes possible, since the predetermined preheating temperature may be reached in a comparatively short period of time.

However, in a conventional preheating method using an oven system in which preheating is effected in a preheating chamber by the application of microwaves to an elastomer product mounted on a turntable from a waveguide provided above the latter, when processing a green tire, which normally varies in thickness and rubber components in a radial direction, deviation in the preheating temperatures inevitably occurs in the radial direction, thus resulting in unevenly distributed preheating temperatures in the green tire as a whole.

US—A—37 45 21 discloses an apparatus and a method for preheating an elastomer product comprising placing the elastomer product laterally on a turntable rotatably provided within a preheating chamber for rotation by a driving means and applying high frequency waves to the elastomer product being rotated on said turntable through two radiators coupled to high frequency generating means.

One object of the present invention is to provide a method of preheating elastomer products in a vulcanization process which is capable of uniformly preheating the elastomer product up to a predetermined temperature in an efficient manner.

Another important object of the present invention is to provide a method of preheating elastomer products as described above which can be readily introduced into a vulcanizing process using a simple arrangement at low energy cost.

A further object of the present invention is to provide an improved preheating apparatus for effecting the preheating method of the present invention as described above in an efficient manner.

Thus the present invention relates to a method of preheating an elastomer product comprising placing the elastomer product for example a green tire, laterally on a turntable rotatably provided within a preheating chamber for rotation by a driving means and applying high frequency waves to the elastomer product being rotated on said turntable through two radiators coupled to high frequency generating means, characterized by the steps of intermittently applying high frequency waves across an upper surface of the elastomer product which is being rotated on said turntable, via a first waveguide means provided above said turntable and coupled to a first high frequency generating means, simultaneously applying high frequency waves intermittently to a side portion of the elastomer product being rotated, via a horn means arranged so as to be vertically movable or variable in its angular positions and coupled, via a second waveguide means, to a second high freqency generating means for heat diffusion within the elastomer product, and also measuring, by a non-contact thermometer, temperatures in the radial direction and circumferential direction of the elastomer product, during interruption of irradiation with the high frequency waves so as to render the preheating temperature within the elastomer product uniform by increasing and decreasing the high frequency wave output of the high frequency generating means in accordance with said measured temperatures.

The improved preheating method according to the present invention as described above has made it possible to preheat elastomer products up to a required temperature in an efficient manner using a simple procedure.

The invention, furthermore, relates to a preheating apparatus for preheating an elastomer product comprising a turntable rotatably provided within a preheating chamber for rotation by a driving means so as to laterally place an elastomer product to be processed thereon, and two radiators coupled to high frequency generating means, characterized by a first waveguide means provided above said turntable and coupled to a first high frequency generating means for intermittently applying high frequency waves across an upper surface of the elastomer product which is being rotated on said turntable via said first waveguide means, a horn means coupled, via a second waveguide means provided at side portions of said turntable, to a second high frequency generating means, and arranged so as to be vertically movable or variable in its angular positions for intermittently applying the high frequency waves to a side portion of the elastomer product via said horn means so as to diffuse heat within said elastomer product, and a non-contact thermometer arranged to measure the temperature in radial and circumferential directions of the elastomer product during interruption of irradiation with the high frequency waves, so as to render the preheating temperature within the elastomer product uniform by increasing and decreasing the high frequency output of the high frequency means in accordance with said measured temperatures.

These and other objects and features of the present invention will become apparent from the following description taken in conjunction with the preferred embodiment thereof with reference to the accompanying drawings, in which:

Fig. 1 is a schematic side sectional view of a microwave preheating apparatus with which the method for preheating elastomer products according to the present invention may be applied.

Fig. 2 is a perspective view of a green tire to be processed by the preheating apparatus of Fig. 1.

Fig. 3 is a block diagram of control circuitry for the apparatus of Fig. 1.

Fig. 4 is a graph showing one example of the relationship between surface temperatures and rotational angles of a green tire during one rotation of said tire, and

Fig. 5 is a time chart illustrating one cycle of intermittent irradiation with microwaves.

Before the description of the present invention proceeds, it is pointed out that like parts are designated by like reference numerals throughout the accompanying drawings.

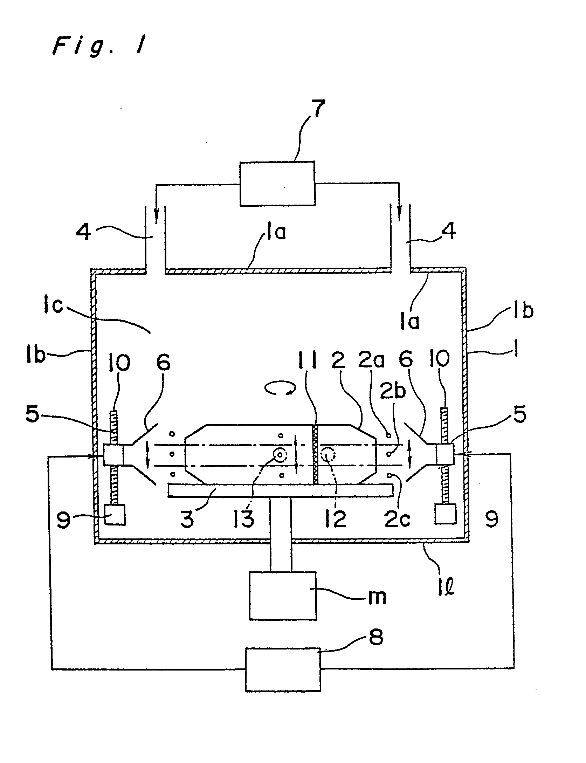

Referring now to the drawings, there is shown in Fig. 1 a microwave preheating apparatus with which the method of preheating elastomer products according to one preferred embodiment of the present invention may be applied.

The microwave preheating apparatus as illustrated in Fig. 1 includes a preheating chamber 1 defined by a top wall 1a, side walls 1b and 1c and a bottom wall 1l, a turntable 3 rotatably provided at the central portion above and adjacent to the bottom wall 1l of the preheating chamber 1 for rotation by a driving means such as a motor m, with an elastomer product, for example a green tire 2, being laterally mounted thereon, a set of waveguides 4 provided in the top wall 1a in positions corresponding to the peripheral surface of the green tire 2 and coupled to a magnetron 7 provided outside the preheating chamber 1, and a set of horns 6 connected to another set of waveguides 5 which are respectively provided adjacent to the side walls 1b so

as to be coupled to a magnetron 8 also provided outside the preheating chamber 1.

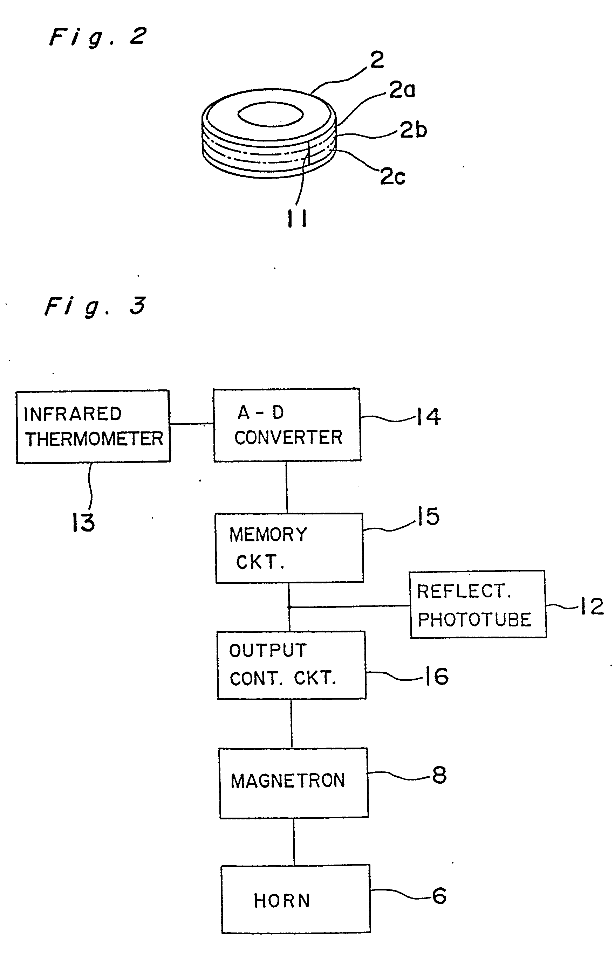

The horns 6 are respectively supported by corresponding threaded shafts 10, each associated with motors 9 for rotation and arranged to be vertically moved so as to be stopped in their central portions at three points, namely an upper stage 2a, a middle stage 2b, and a lower stage 2c predetermined by dividing the peripheral side face of the green tire 2 into three portions (Fig. 2).

It should be noted here that the above arrangement may be modified in such a manner that each of the horns 6 is supported by a pivotal mechanism (not specifically shown) for upward and downward movements so as to be stopped, in its central position, at three predetermined positions for the upper, middle and lower stages, 2a, 2b and 2c respectively, of the green tire 2.

On one of the side walls 1c of the preheating chamber 1 there are provided a reflecting type phototube 12 for detecting a mark 11 painted at a predetermined position on a peripheral side face of the green tire 2 as shown in Fig. 2, and an infrared thermometer 13 for measuring temperatures in each stage by stopping at the predetermined three points for the upper, middle and lower stages, 2a, 2b and 2c respectively, of the green tire 2 during interruption of the microwave irradiation.

Referring also to Fig. 3, there is shown a control circuit for controlling the function fo the magnetron 8. In the control circuit of Fig. 3, the infrared thermometer 13 is coupled, via an A—D converter 14, to a memory circuit 15 which is further coupled, via an output control circuit 16 and the magnetron 8, to the horns 6, with the reflecting type phototube 12 being connected to a junction between the memory circuit 15 and the output control circuit 16 as shown.

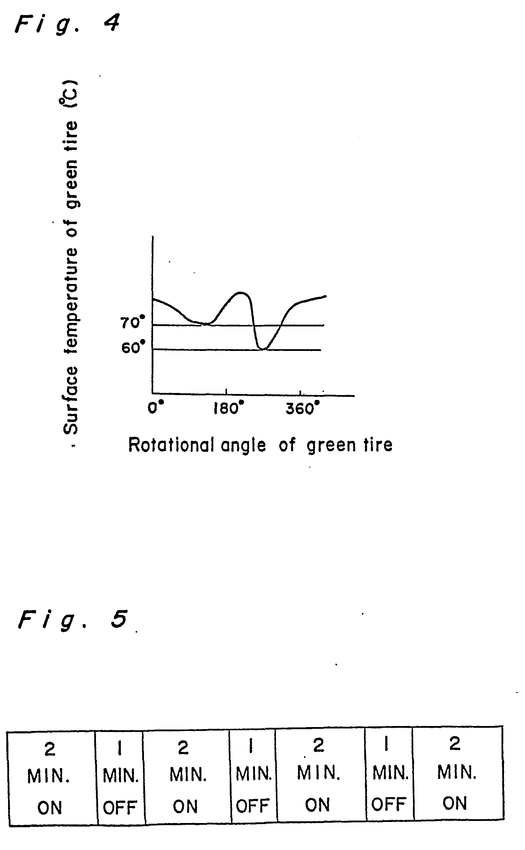

In the above circuit construction, the temperature signal from the infrared thermometer 13 is memorized in the memory circuit 15 via the A—D converter 14, and via the output control circuit 16 the magnetron 8 is so controlled as to generate microwaves intermittently by repeating, approximately four times, a cycle comprising generation for two minutes and interruption for one minute of the generation of the microwaves as shown in Fig. 5, with the microwave output being accordingly increased or decreased to suit the purpose.

By the foregoing apparatus a microwave output of for example 3 kW is intermittently applied in a radial direction via the waveguides 4 from above the green tire 2 (e.g. with a size of 10.00—20) which is being rotated by the turntable 3 at a speed of about 20 r.p.m., while a microwave output of for example 5 kW is intermittently applied laterally through the horns 6 in a circumferential direction of the tire 2.

After irradiation with the microwave energy for two minutes, with a one-minute interruption, the mark 11 on the green tire 2 is detected by the reflecting type phototube 12, and during one rotation of the green tire 2 the temperature at the upper stage 2a of the green tire 2 is measured by the infrared thermometer 13, for example as shown in the graph of Fig. 4. The temperature thus measured is memorized in the memory circuit 15, and the microwave output from the horns 6 is controlled by the control circuit 16 based on a program previously determined, in the range between 5 and 2 kW in such a manner that if, for example, the temperature is at 60°C, the voltage is set at 7000 V (output 4 kW), and if the temperature is at 70°C, the voltage is then adjusted to 3000 V (output 3 kW).

When the output from the horns 6 is less than 2 kW, there is a possibility that the output may undesirably fluctuate, while if, conversely, the output exceeds 5 kW the temperature is execessively raised beyond an upper limit of the preheating temperature.

After the single cycle as shown in Fig. 5, the horns 6 and the infrared thermometer 13 are shifted down to the middle stage 2b of the tire 2 for repetition of the same cycle, and then further shifted down to the lower stage 2c for similar repetition of the same cycle.

By the repetition of the intermittent irradiation with microwaves as described above, uniform preheating of the green tire 2 as a whole is expedited through heat diffusion by heat conduction. The temperature in the radial direction is varied by adjusting the height of the horns 6, while the temperature in the circumferential direction is adjusted by increasing or decreasing the microwave output. Thus the uniformity of the preheating temperature of the entire green tire 2 is enhanced still further.

As is clear from the foregoing description, according to the present invention high frequency waves are intermittently applied to the elastomer product mounted on the turntable, from its upper and side portions, while the temperatures of the elastomer product in the radial and circumferential directions are measured for adjustments of output and directions of irradiation with the high frequency waves. This means that the preheating temperature in the elastomer products per item and per lot may be made uniform quickly and advantageously for efficient preheating.

Although the present invention has been fully described by way of example with reference to the accompanying drawings, it should be noted that various changes and modifications will be apparent to those skilled in the art within the scope of the appended claims.

**Claims**

1. A method of preheating an elastomer product comprising placing the elastomer product laterally on a turntable (3) rotatably provided within a preheating chamber (1) for rotation by a driving means and applying high frequency waves to the elastomer product being rotated on said turntable (3) through two radiators coupled to high frequency generating means, characterized by the steps of intermittently applying high frequency waves across and upper surface of the elastomer product which is being rotated on said turntable, via a first waveguide means (4) provided above said turntable and coupled to a first high frequency generating means (7), simultaneously applying high frequency waves intermittently to a side portion of the elastomer product being rotated, via a horn means (6) arranged to be vertically movable or variable in its angular positions and coupled, via a second waveguide means (5), to a second high frequency generating means (8) for heat diffusion within the elastomer product, and also measuring temperatures in the radial direction and circumferential direction of the elastomer product, during interruption of irradiation with the high frequency waves, by a non-contact thermometer so as to render the preheating temperature within the elastomer product uniform by increasing and decreasing the high frequency wave output of the high frequency generating means in accordance with said measured temperatures.

2. A method as claimed in Claim 1, wherein said elastomer product is a green tire.

3. A preheating apparatus for preheating an elastomer product comprising a turntable (3) rotatably provided within a preheating chamber (1) for rotation by a driving means so as to laterally place an elastomer product to be processed thereon, and two radiators, coupled to high frequency generating means, characterized by a first waveguide means (4) provided above said turntable (3) and coupled to a first high frequency generating means (7) for intermittently applying high frequency waves across an upper surface of the elastomer product which is being rotated on said turntable (3) via said first waveguide means (4), a horn means (6) coupled, via a second waveguide means (5) provided at side portions of said turntable (3), to a second high frequency generating means (8), and arranged so as to be vertically movable or variable in its angular positions for intermittently applying the high frequency waves to a side portion of the elastomer product via said horn means (6) so as to diffuse heat within said elastomer product, and a non-contact thermometer arranged to measure the temperature in radial and circumferential directions of the elastomer product during interruption of irradiation with the high frequency waves, so as to render the preheating temperature within the elastomer product uniform by increasing and decreasing the high frequency output of the high frequency generating means in accordance with said measured temperatures.

4. Apparatus as claimed in Claim 3, wherein said first waveguide means (4) is a pair of waveguides provided on a top wall (1a) of said preheating chamber (1) and coupled to a first magnetron for said first high frequency generating means (7).

5. Apparatus as claimed in Claim 3, wherein said horn means (6) is a pair of horns coupled, via a corresponding pair of waveguides (5) for said second waveguide means (5), to a second magnetron for said second high frequency generating means (8) said horns being arranged to be vertically movable through screw thread mechanisms or variable in their angular positions through pivotal mechanisms.

6. Apparatus as claimed in Claim 3, wherein said non-contact thermometer is an infrared thermometer (13).

## Patentansprüche

1. Verfahren zum Vorheizen eines elastomeren Produkts, das seitlich auf einem Drehtisch (3) aufgebracht wird, der innerhalb einer Vorheizkammer (1) drehbar angeordnet ist und mit Hilfe eines Antriebs gedreht wird, wobei das auf dem Drehtisch (3) gedrehte elastomere Produkt über zwei Strahler Hochfrequenzwellen ausgesetzt wird, die mit einem Hochfrequenzgenerator verbunden sind, gekennzeichnet durch die folgenden Verfahrensschritte:

Intermittierende Zufuhr von Hochfrequenzwellen auf eine Oberseite des elastomeren Produkts, das auf dem Drehtisch gedreht wird, über einen ersten Wellenleiter (4), der oberhalb des Drehtisches angeordnet und mit einem ersten Hochfrequenzgenerator (7) verbunden ist, simultanes Anlegen von Hochfrequenzwellen intermittierend an einen Seitenabschnitt des sich drehenden elastomeren Produkts über eine Hornanordnung (6), die vertikal beweglich oder in ihrer Winkelposition variabel angeordnet und über einen zweiten Wellenleiter (5) mit einem zweiten Hochfrequenzgenerator (8) zur Wärmediffusion innerhalb des elastomeren Produkts verbunden ist, und Messen der Temperaturen in Radialrichtung und Umfangsrichtung des elastomeren Produkts während der Unterbrechung der Strahlung der Hochfrequenzwellen mit Hilfe eines berührungsfreien Thermometers, so daß die Vorheiztemperatur innerhalb des elastomeren Produkts gleichförmig wird, indem das Hochfrequenzausgangssignal des Hochfrequenzgenerators entsprechend den gemessenen Temperaturen erhöht bzw. erniedrigt wird.

2. Verfahren nach Anspruch 1, dadurch gekennzeichnet, daß das elastomere Produkt ein Reinfenrohling ist.

3. Vorrichtun zum Vorheizen eines elastomeren Produkts mit einem Drehtisch (3), der innerhalb einer Vorheizkammer (1) drehbar angeordnet ist und durch einen Antrieb gedreht wird, um darauf ein zu bearbeitendes elastomeres Produkt seitlich anzuordnen, und mit zwei mit einem Hochfrequenzgenerator verbundenen Strahlungseinrichtungen, gekennzeichnet durch eine oberhalb des Drehtisches (3) angeordnete erste Wellenleiteranordnung (4), die mit einem ersten Hochfrequenzgenerator (7) verbunden ist, um Hochfrequenzzwellen auf eine Oberseite des elastomeren Produkts, das auf dem Drehtisch (3) gedreht wird, intermittierend über die erste Wellenleiteranordnung (4) zuzuführen, eine Hornanordnung (6), die über einen zweiten Wellenleiter (5), der an Seitenabschnitten des Drehtisches (3) angeordnet ist, mit einem zweiten Hochfrequenzgenerator (8) verbunden und so angeordnet ist, daß sie vertikal beweglich oder in ihrer Winkelposition variabel ist, um die Hochfrequenzwellen auf einen Seitenabschnitt des elastomeren Produkts über die Hornanordnung (6) intermittierend zuzuführen und Wärme in das elastomere Produkt zu diffundieren, und durch ein berührungsfreies Thermometer, das die Temperatur in Radial- und Umfangsrichtung des elastomeren Produkts während der Unterbrechung der Strahlung der Hochfrequenzwellen mißt, um die Vorheiztemperatur innerhalb des elastomeren Produkts zu vergleichmäßigen durch Erhöhen bzw. Erniedrigen des Hochfrequenzausgangssignals des Hochfrequenzgenerators entsprechend den gemessenen Temperaturen.

4. Vorrichtung nach Anspruch 3, dadurch gekennzeichnet, daß die erste Wellenleiteranordnung (4) ein Wellenleiterpaar ist, das auf einer oberen Wand (1a) der Vorheizkammer (1) vorgesehen und mit einem ersten Magnetron für den ersten Hochfrequenzgenerator (7) verbunden ist.

5. Vorrichtung nach Anspruch 3, dadurch gekennzeichnet, daß die Hornanordnung (6) ein Hornpaar ist, das über ein entsprechendes Paar Wellenleiter (5) für die zweite Wellenleiteranordnung (5) mit einem zweiten Magnetron für den zweiten Hochfrequenzgenerator (8) verbunden ist, wobei die Hörner über einen Schrauben-Gewinde-Mechanismus vertikal beweglich oder in ihren Winkelpositionen über einem Schwenkmechanismus variabel angeordnet sind.

6. Vorrichtung nach Anspruch 3, dadurch gekennzeichnet, daß das berührungsfreie Thermometer ein Infrarotthermometer (13) ist.

## Revendications

1. Procédé de préchauffage d'un produit élastomère, comprenant la disposition du produit élastomère latéralement sur une table de rotation (3) disposée de manière qu'elle puisse tourner dans une chambre de préchauffage (1) sous l'action d'un dispositif d'entraînement, et l'application d'ondes à haute fréquence au produit élastomère entraîné en rotation sur la table de rotation (3) à à l'aide de deux antennes couplées à un dispositif générateur de hautes fréquences, caractérisé par les étapes d'application intermittente d'ondes à hautes fréquences à la surface supérieure de produit élastomère que est entraîné en rotation sur la table de rotation, par l'intermédiaire d'un premier guide d'ondes (4) placé au-dessus de la table de rotation et couplé à un premier dispositif (7) générateur de hautes fréquences, d'application simultanée d'ondes à hautes fréquences de manière intermittente à une partie latérale du produit élastomère en cours de rotation, par l'intermédiaire d'un dispositif à pavillon (6) disposé afin qu'il soit mobile verticalement ou variable en position angulaire et couplé, par un second guide d'ondes (5), à un second dispositif (8) générateur de hautes fréquences, afin que de la chaleur diffuse dans le produit élastomère, et en outre de mesure des températures en direction radiale et en direction circonférentielle dans le produit élastomère, pendant l'interruption de l'irradiation par les ondes à hautes fréquences, à l'aide d'un thermomètre sans contact, afin que la température de préchauffage dans le produit élastomère soit rendue uniforme par augmentation et réduction des ondes à hautes fréquences transmises par les dispositifs générateurs de hautes fréquences, en fonction des températures mesurées.

2. Procédé selon la revendication 1, dans lequel le produit élastomère est un pneumatique non vulcanisé.

3. Appareil de préchauffage d'un produit élastomère, comprenant une table de rotation (3) disposée dans une chambre de préchauffage (1) afin qu'elle soit entraîné en rotation par un dispositif d'entraînement, un produit élastomère étant placé latéralement sur la table pour y être traité, et deux antennes couplées à des dispostifs générateurs de hautes fréquences, caractérisé par un premier guide d'ondes (4) disposé au-dessus de la table de rotation (3) et couplé à un premier dispositif (7) générateur de hautes fréquences destiné à appliquer par intermittence des ondes à hautes fréquences à la surface supérieure de produit élastomère qui est entraîné en rotation sur la table de rotation (3), à l'aide du premier guide d'ondes (4), un dispositif (6), à pavillon, couplé, par un second guide d'ondes (5) placé sur des parties latérales de la table de rotation (3), à un second dispositif (8) générateur de hautes fréquences et disposé de manière qu'il soit mobile verticalement ou variable en position angulaire afin qu'il applique par intermittence les ondes à hautes fréquences à une partie latérale du produit élastomère par l'intermédiaire du dispositif (6) à pavillon, afin que de la chaleur diffuse dans le produit élastomère, et un thermomètre sans contact destiné à mesurer la température en directions radiale et circonférentielle du produit élastomère pendant l'interruption de l'irradiation par les ondes à hautes fréquences, si bien que la température de préchauffage dans le produit élastomère est rendue uniforme par augmentation et réduction de l'énergie à hautes fréquence des dispositifs générateurs de hautes fréquences en fonction des températures mesurées.

4. Appareil selon la revendication 3, dans lequel le premeir guide d'ondes (4) est formé par une paire de guides d'ondes disposés sur une paroi supérieure (1a) de la chambre de préchauffage (1) et couplés à un premier magnétron du premier dispositif (7) générateur de hautes fréquences.

5. Appareil selon la revendication 3, dans lequel le dispositif (6) à pavillon comporte deux pavillons qui sont couplés, par une paire correspondante de guides d'ondes (5) du second guide d'ondes (5), à un second magnétron du second dispositif (8) générateur du hautes fréquences, les pavillons étant disposés afin qu'ils puissent être déplacés verticalement par des mécanismes à vis-mère ou ayant des positions angulaires variables sous la commande d'un mécanisme pivotant.

6. Appareil selon la revendication 3, dans lequel le thermomètre sans contact est un thermomètre infrarouge (13).

# Fig. 1

Fig. 2

Fig. 3

*Fig. 4*

Surface temperature of green tire (°C)

70°
60°

0°    180°    360°

Rotational angle of green tire

*Fig. 5*

| 2 MIN. ON | 1 MIN. OFF | 2 MIN. ON | 1 MIN. OFF | 2 MIN. ON | 1 MIN. OFF | 2 MIN. ON |
|-----------|------------|-----------|------------|-----------|------------|-----------|